(19) **Europäisches Patentamt**

**European Patent Office**

**Office européen des brevets**

(11) Veröffentlichungsnummer: **0 255 070 B1**

## (12) EUROPÄISCHE PATENTSCHRIFT

(45) Veröffentlichungstag der Patentschrift: **13.05.92**

(21) Anmeldenummer: **87110802.3**

(22) Anmeldetag: **25.07.87**

(51) Int. Cl.5: **G01N 35/00**, G01N 35/02, G01N 31/22

(54) **Vorrichtung zum automatischen Zuführen von Teststreifen in eine Analysenapparatur.**

(30) Priorität: **30.07.86 DE 3625705**

(43) Veröffentlichungstag der Anmeldung:
**03.02.88 Patentblatt 88/05**

(45) Bekanntmachung des Hinweises auf die
Patenterteilung:
**13.05.92 Patentblatt 92/20**

(84) Benannte Vertragsstaaten:
**AT BE CH DE ES FR GB IT LI NL SE**

(56) Entgegenhaltungen:
DE-A- 2 437 332
US-A- 3 532 469
US-A- 4 453 406

(73) Patentinhaber: **HOECHST AKTIENGESELL-
SCHAFT
Postfach 80 03 20
W-6230 Frankfurt am Main 80(DE)**

(72) Erfinder: **Sänger, Hans Dieter
Johann-Sittig-Strasse 1
W-6230 Frankfurt am Main 80(DE)**
Erfinder: **Gross, Jürgen, Dr.
Frankfurter Strasse 4
W-6238 Hofheim(DE)**
Erfinder: **Simonek, Rüdiger, Dr.
Geisenheimer Strasse 88
W-6230 Frankfurt am Main 70(DE)**

**Beschreibung**

Die Erfindung betrifft eine Vorrichtung zum automatischen Zuführen Von Teststreifen mit mindestens einem Testfeld in eine Analysenapparatur, wobei die Vorrichtung aus einem Teil zum Vereinzeln der Streifen, einem Teil zum Feststellen der Lage der Testfelder und Wenden der Streifen, sowie einem Teil zum Befeuchten der Testfelder des Steifens mit Flüssigkeit besteht.

Für die allgemeine Harndiagnostik stehen sogenannte Mehrtachtesteifen zum Bestimmenvon Bilirubin, Urobilinogen, Ketonkörper, Ascorbinsäure, Glukose, Protein, Nitrit, des pH-Wertes und Blut zur Verfügung. Derartige Teststreifen enthaften mehrere Testfelder, auf denen die dem jeweiligen Testzugehörenden Reagenzien als Indikator angeordnet sind. Nach der DE-A1 2437332 werden die Teststreifen einem Vorratsbehälter entnommen, mit Urin befeuchtet und anschließend analysiert. das Befeuchten mit Urin geschieht durch Eintauchen der Teststreifen bzw. durch Auftropfen aus einer parallel zum Teststreifen verschiebbaren Pipette. Nachteilig bei dieser Vorrichtung ist, daß die Teststreifen wohl geordnet im Vorratsbehälter vorgelegt werden müssen. Hier will die Erfindung Abhilfe schaffen.

Die Erfindung löst die Aufgabe dadurch, daß
a) ein Vorratsbehälter für die Teststreifen mit einer Öffnung versehen ist, in der eine Transporteinrichtung angeordnet ist, die mit Mitnehmern versehen ist, die die Teststreifen auf ein Leitblech übergeben, und Nocken aufweist, die einen in die Öffnung des Behälters ragenden, beweglich angeordneten Bügel auf und abbewegen,
b) das Leitblech in eine Führung übergeht, die in eine Wendevorrichtung für die Teststreifen mündet, zwischen Führung und Wendevorrichtung ein Verschluß für die Führung angeordnet ist, der über einen Hebel mit einer Haltevorrichtung für die Teststreifen verbunden ist, die in die Führung hineinragt und den nachfolgenden Teststreifen festhält sobald der Verschluß öffnet, die Haltevorrichtung und der Verschluß drehbar gelagert und mit einer Antriebsvorrichtung versehen sind, die Wendevorrichtung eine bewegliche Sperre aufweist, die bei falscher Lage des Teststreifens durch eine in der Führung angeordnete Lagererkennungseinrichtung angetrieben wird, und das Wenden der Teststreifen bewirkt,
c) der Wendevorrichtung ein Transportband nachgeschaltet ist, über dem eine Sprüheinrichtung für Flüssigkeit parallel zum Teststreifen verschiebbar angeordnet ist und die Sprüheinrichtung mit einem Sensor versehen ist, der das Transportband anhält, wenn der Teststreifen sich unter der Sprüheinrichtung befindet.

Die Transporteinrichtung kann aus einer Walze mit Mitnehmern auf ihrem Mantel bestehen, wobei die Mitnehmer als Nocken ausgebildet sind. Auf mindestens einer der Stirnflächen der Walze können Bolzen angeordnet sein, die mit einer Klinke zusammenwirken, und die Klinke kann miteiner Rückstelleinrichtung verbunden sein. Alternativ kann die Transporteinrichtung aus einem Transportband bestehen, das mit Mitnehmern versehen und über Umlenkrollen geführt ist und dessen der Öffnung gegenüberliegende Umlenkrolle die Nokken aufweist. Die Wendevorrichtung kann aus einer evakuierbaren, drehbar gelagerten, hohlen Walze bestehen, die mit Abstand über einer Transporteinrichtung für die Teststreifen angeordnet ist und mit dieser einen Spalt bildet, in dem die Sperre angeordnet ist. Die Walze kann auf ihrer Umfangsfläche eine Leckageöffnung aufweisen, über die der Teststreifen angesaugt und von der Walze mitgenommen wird, wenn die Sperre den Teststreifen angehalten hat. Die Wendevorrichtung kann aber auch aus einer Walze bestehen die parallel zu ihrer Drehachse T-förmig geschlitzt ist, und der dem Schlitz der T-Kontur gegenüberliegende Teil der Walze als Sperre ausgebildet ist. Die Sprüheinrichtung kann mit mindestens einer Absaugvorrichtung zum Absaugen überschüsssiger Flüssigkeit zwischen den einzelnen Testfeldern versehen sein. Sie kann aber auch ein Schrittwerk aufweisen, das die Sprüheinrichtung über jedem Testfeld anhält und das mit einem Ventil verbunden ist, das im flüssigkeitsführenden Teil der Sprüheinrichtung angeordnet ist.

Im folgenden wird die Erfindung anhand der Figuren, die lediglich beispielsweise Ausführungsformen darstellen, näher erläutert. Es zeigen.

Figur 1 die Vorrichtung zum Zuführen der Teststreifen in Seitenansicht,
Figur 2 die Walze gemäß Figur 1 in perspektivischer Darstellung, teilweise geschnitten,

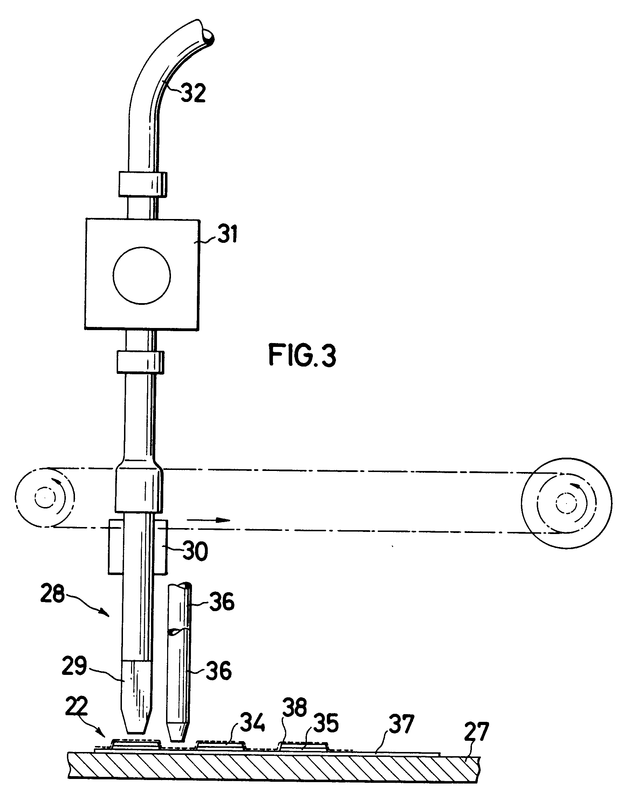

Figur 3 eine Ansicht der Benetzungseinrichtung,
Figur 4 eine Variante von Teil A in Seitenansicht und
Figur 5 eine Variante von Teil B in Seitenansicht.

Die erfindungsgemäße Vorrichtung besteht aus einem Teil A zum Vereinzeln der Teststreifen, aus einem Teil B zum Feststellen der Lage der Testfelder und Wenden der Teststreifen und einem Teil C zum Befeuchten der Testfelder mit Flüssigkeit.

Teil A besteht aus einem Vorratsbehälter 1 für die Teststreifen 13. Der Vorratsbehälter 1 ist mit einer Öffnung 14 versehen, die praktisch durch die Transporteinrichtung 12 verschlossen wird. In die Öffnung 14 ragt ein Bügel 11 hinein, der beweglich am Vorratsbehälter oder dergleichen angeordnet ist. Der Bügel 11 wird mittels Nocken 19, 19a auf- und abbewegt, um das Nachrutschen der Teststreifen zu gewährleisten und um Brückenbildung zu vermeiden. Die Transporteinrichtung 12 kann aus einem Transportband 15 bestehen, das mit Mitnehmern 3 versehen ist und über Umlenkrollen 17, 18 geführt wird. Die der Öffnung 14 des Vorratsbehälters 1 gegenüberliegende Umlenkrolle 17 ist mit Nocken 19 versehen, die den Bügel 11 antreiben. Die Mitnehmer 3 greifen sich jeweils einen Teststreifen 13 aus dem Vorratsbehälter und übergeben ihn einem Leitblech 7, über das sie in eine Führung 8 gelangen. Die Kante 20 dient als Abstreifer für überflüssige Teststreifen 13. Der Antrieb für die Transporteinrichtung 12 kann elektrisch oder anderweitig erfolgen.

Die Transporteinrichtung 12 kann aber auch aus einer zylindrischen Walze 46 (Figur 4) bestehen, auf deren Mantel Mitnehmer 3a angeordnet sind. Bei Verwendung klauenförmiger Mitnehmer kann es zweckmäßig sein, eine Klinke 39 anzuordnen, um die Teststreifen vom Mitnehmer auszuwerfen, damit sie sich nicht zwischen Mitnehmer 3a und Leitblech 7 verklemmen. Die Klinke 39 wird von Bolzen 40 angetrieben, die auf einer Stirnseite der Walze 46 angeordnet sind. Es kann zweckmäßig sein, auf beiden Stirnseiten Klinken und Bolzen vorzusehen. Die Bolzen 40 nehmen die Klinke 39, die unabhängig von der Walze 46 befestigt ist, z.B. am Lagerbock 21, and der Zunge 41 mit.

Die Rückholfeder 42 bringt die Klinke in ihre Ausgangslage, sobald sie vom Bolzen 40 freigegeben ist.

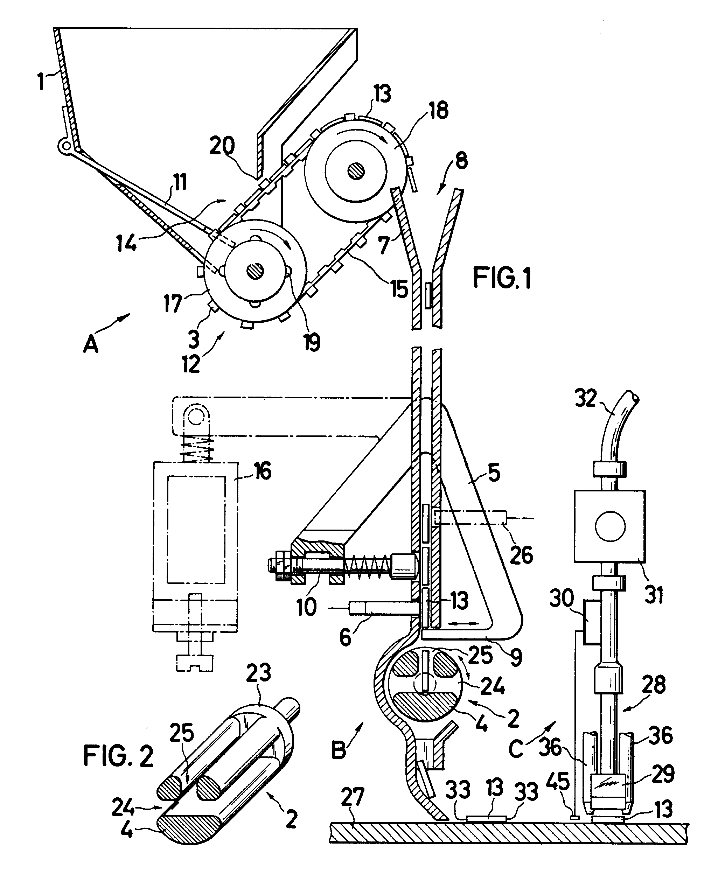

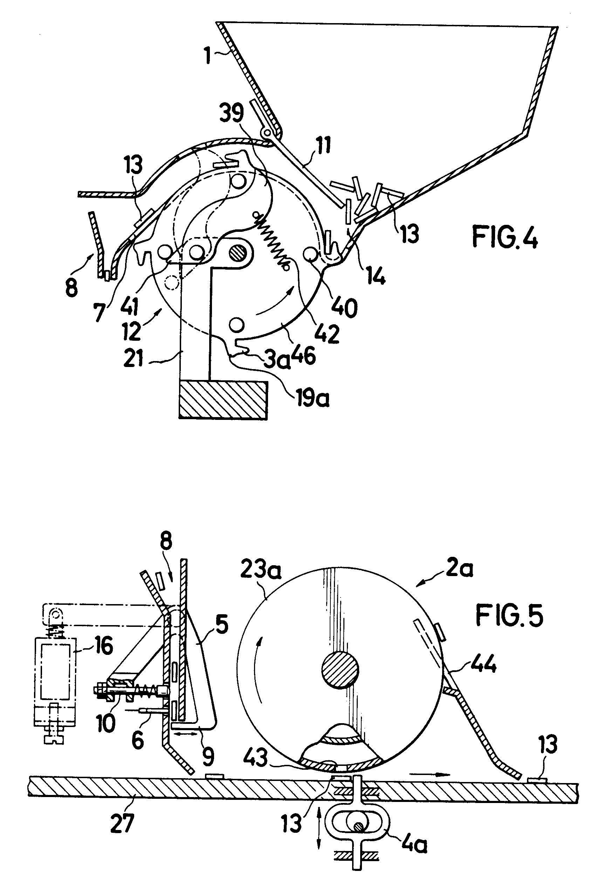

Teil B weist eine Führung 8 auf, die in eine Wendevorrichtung 2, 2a für die Teststreifen 13 mündet. Zwischen Führung 8 und Wendevorrichtung 2, 2a ist ein Verschluß 9 für die Führung angeordnet. Der Verschluß 9 ist über einen Hebel 5 mit einer Haltevorrichtung 10, z.B. einem federbelasteten Stößel für die Teststreifen 13 verbunden. Die Haltevorrichtung 10 ragt in die Führung 8 hinein und ist synchron mit dem Verschluß 9 gelagert. Gibt der Verschluß 9 den Austritt des Teststreifens aus der Führung 8 frei, wird der nachfolgende Teststreifen in der Führung durch die Haltevorrichtung 10 festgehalten, bis die Führung wieder verschlossen ist. Haltevorrichtung und Verschluß sind mit einer Antriebsvorrichtung 16 versehen. Es kann zweckmäßig sein die Führung 8 mit einer Überwachungseinrichtung 26 zu versehen. Die Wendevorrichtung 2, 2a weist eine Sperre 4, 4a auf, die durch die aufbereiteten Impulse einer Lagenerkennungseinrichtung 6, z.B. einer Reflexlichtschranke, angetrieben wird. Mit der Lageerkennenungseinrichtung 6 wird die Lage des Testfeldes 22 auf dem Teststreifen 13 festgestellt. Zeigt das Testfeld in die falsche Richtung, verhindert die Sperre 4, 4a den Weitertransport des Teststreifens 13 zum Teil C, der Benetzungseinrichtung. Der Teststreifen 13 wird gewendet. Das Wenden kann mittels einer Walze 23 (Figur 2) geschehen, die parallel zu ihrer Drehachse mit einem im Querschnitt T-förmigen Schlitz versehen ist. Die Öffnung 24 des Schlitzes ist als Durchtrittsöffnung in der Walze 23 vorgesehen, während der Schlitz 25 an der Sperre 4 endet. Signalisiert die Lageerkennungseinrichtung 6 die richtige Lage des Teststreifens, kann der Teststreifen ohne Hindernis die Walze 23 passieren. Andernfalls wird er von der Sperre 4 angehalten und durch Drehen der Walze 23 um 180° gewendet. Das Wenden kann aber auch mittels einer hohlen Walze 23a (Figur 5) vorgenommen werden, die evakuierbar ist, und eine Leckageöffnung 43 aufweist. Wird der Teststreifen 13 von der Sperre 4a angehalten, wird er durch die Leckageöffnung 43 vom Vakuum angesogen, am Walzenumfang gehalten und durch Drehen der Walze 23a in Pfeilrichtung gewendet und mit einem Abstreifer 44 von der Walze abgenommen.

Bei Teil C, der Einrichtung zum Benetzen der Teststreifen 13, ist über einem Transportband 27 für die Teststreifen 13 eine Sprüheinrichtung 28 angeordnet. Die Sprüheinrichtung 28 kann mit einer Breitschlitzdüse 29 versehen sein und kann parallel zum Teststreifen 13 verschoben werden, wobei die Düse die einzelnen Testfelder 22 überfährt. Bei schrittweiser Bewegung der Sprüheinrichtung 28 ist die Sprüheinrichtung 28 mit einem Schrittwerk 30 versehen, das dafür sorgt, daß die Düse 29 jeweils über einem Testfeld 22 zum Stehen kommt. Gleichzeitig wird ein Ventil 31 betätigt, das in der Zuleitung 32 für die Flüssigkeit angeordnet sein kann. Das Ventil 31 kann mit dem Schrittwerk 30 mechanisch oder elektrisch verbunden sein. Die Schlitzdüse 29 ist zweckmäßig der Geometrie des Testfeldes 22 angepaßt, damit Flüssigkeit an den Seiten 33 der Testfelder 22 von der saugfähigen Unterlage 35 für den Reagenzträger 34 aufgesaugt werden kann. Insbesondere bei stetigem Überfahren der Testfelder 22 muß dafür Sorge getragen werden, daß überschüssige Flüssigkeit zwischen den einzelenen Testfeldern entfernt wird. Hierfür kann die Sprüheinrichtung mit mindestens einer Absaugevorrichtung 36 versehen sein. Gemäß Figur 1 sind zwei Absaugevorrichtungen 36 vorgesehen. Der Teststreifen besteht in der Regel aus einem Träger 37, den Testfeldern 22 und einer netzartigen Abdeckung 38 zum Schutz der Testfelder, wobei die seitlichen Bezirke 33 der Testfelder ungeschützt bleiben. Die Testfelder 22 können aus einer saugfähigen Unterlage 35 für den Reagenzträger und dem Reagenzträger 34 bestehen. Die Sprüheinrichtung 28 kann mit einem Sensor 45 versehen sein, mit dessen Hilfe das Transportband 27 angehalten wird, sobald ein Teststreifen 13 unter der Sprüheinrichtung 28 zum Liegen kommt. Steht die Transporteinrichtung 27, sind die Einrichtungen zum Vereinzeln und Wenden ebenfalls angehalten.

## Patentansprüche

1. Vorrichtung zum automatischen Zuführen von Teststreifen (13) mit mindestens einem Testfeld (22) in eine Analysenapparatur, wobei die Vorrichtung aus einem Teil (A) zum Vereinzeln der Teststreifen (13), einem Teil (B) zum Feststellen der Lage der Testfelder (22) und Wenden der Teststreifen (13) sowie einen Teil (C) zum Befeuchten der Testfelder (22) des Teststreifens (13) mit Flüssigkeit besteht, dadurch gekennzeichnet, daß

a) ein Vorratsbehälter (1) für Teststreifen (13) mit einer Öffnung (14) versehen ist, in der eine Transporteinrichtung (12) angeordnet ist, die mit Mitnehmern (3) versehen ist, die die Teststreifen auf ein Leitblech (7) übergeben, und Nocken (19, 19a) aufweist, die einen in die Öffnung des Behälters (1) ragenden, beweglich angeordneten Bügel (11) auf- und abbewegen,

b) das Leitblech (7) in eine Führung (8) übergeht, die in eine Wendevorrichtung (2, 2a) für die Teststreifen (13) mündet, zwischen Führung (8) und Wendevorrichtung (2, 2a) ein Verschluß (9) für die Führung (8) angeordnet ist, der über einen Hebel (5) mit einer Haltevorrichtung (10) für die Teststreifen (13) verbunden ist, die in die Führung hineinragt und den nachfolgenden Teststreifen festhält sobald der Verschluß (9) öffnet, die Haltevorrichtung (10) und der Verschluß (9) drehbar gelagert und mit einer Antriebsvorrichtung (16) versehen sind, die Wendevorrichtung (2, 2a) eine bewegliche Sperre (4, 4a) aufweist, die bei falscher Lage des Teststreifens durch eine in der Führung (8) angeordnete Lageerkennungseinrichtung (6) angetrieben wird, und das Wenden der Teststreifen bewirkt,

c) der Wendevorrichtung (2, 2a) ein Transportband (27) nachgeschaltet ist, über dem eine Sprüheinrichtung (28) für Flüssigkeit parallel zum Teststreifen verschiebbar angeordnet ist und die Sprüheinrichtung mit einem Sensor (45) versehen ist, der das Transportband (29) anhält, wenn der Teststreifen (13) sich unter der Sprüheinrichtung (28) befindet.

2. Vorrichtung nach Anspruch 1, dadurch gekennzeichnet, daß die Transporteinrichtung (12) aus einer Walze (46) mit Mitnehmern (3a) auf ihrem Mantel besteht, die Mitnehmer (3a) als Nocken (19a) ausgebildet sind, auf mindestens einer der Stirnflächen der Walze (46) Bolzen (40) angeordnet sind, die mit einer Klinke (39) zusammenwirken, die mit einer Rückstelleinrichtung (42) verbunden ist.

3. Vorrichtung nach Anspruch 1, dadurch gekennzeichnet, daß die Transporteinrichtung (12) aus einem Transportband (15) besteht, das mit Mitnehmern (3) versehen und über Umlenkrollen (17, 18) geführt ist und dessen der Öffnung (14) gegenüberliegende Umlenkrolle (17) die Nocken (19) aufweist.

4. Vorrichtung nach einem der Ansprüche 1 bis 3, dadurch gekennzeichnet, daß die Wendevorrichtung (2a) aus einer evakuierbaren, drehbar gelagerten, hohlen Walze (23a) besteht, die mit Abstand über einem Transportband (27) für die Teststreifen (13) angeordnet ist und mit diesem einen Spalt bildet, in dem die Sperre (4a) angeordnet ist, und die Walze auf ihrer Umfangsfläche eine Leckageöffnung (43) aufweist, über die der Teststreifen angesaugt und von der Walze mitgenommen wird, wenn die Sperre (4a) den Teststreifen angehalten hat.

5. Vorrichtung nach einem der Ansprüche 1 bis 3, dadurch gekennzeichnet, daß die Wendevorrichtung (2) aus einer Walze (23) besteht, die parallel zu ihrer Drehachse T-förmig geschlitzt ist, wobei ein Teil des Schlitzes eine Durchtrittsöffnung (24) und der andere Teil des Schlitzes mit dem der T-Kontur gegenüberliegenden Teil der Walze (23) eine Sperre (4) bildet.

6. Vorrichtung nach einem der Ansprüche 1 bis 5, dadurch gekennzeichnet, daß die Sprüheinrichtung (28) mit mindestens einer Absaugvorrichtung (36) zum Absaugen überschüssiger Flüssigkeit zwischen den einzelnen Testfeldern (22) versehen ist.

7. Vorrichtung nach einem der Ansprüche 1 bis 5, dadurch gekennzeichnet, daß die Sprüheinrichtung (28) mit einem Schrittwerk (30) versehen ist, das die Sprüheinrichtung über jedem Testfeld (22) anhält und das mit einem Ventil (31) verbunden ist, das im flüssigkeitsführen Teil der Sprüheinrichtung (28) angeordnet ist.

## Claims

1. An apparatus for feeding test strips (13) with at least one test zone (22) automatically into an analyser the apparatus comprising a part (A) for separating the test strips (13), a part (B) for fixing the position of the test zones (22) and reversing the test strips (13) and a part (C) for moistening the test zones (22) of the test strip (13) with liquid, wherein

    a) a supply container (1) for test strips (13) is provided with an orifice (14), in which is arranged a transport device (12) equipped with drivers (3), which transfer the test strips to a guide plate (7), and having noses (19, 19a) which move to and fro a moveably arranged bar (11) projecting into the orifice in the container (1),

    b) the guide plate (7) merges into a guide (8) which opens into a reversing device (2, 2a) for the test strips (13), between the guide (8) and the reversing device (2, 2a) is arranged a closing means (9) for the guide (8), the said closing means (9) being connected via a lever (5) to a holding device (10) for the test strips (13) which projects into the guide and secures the following test strip as soon as the closing means (9) opens, the holding device (10) and the closing means (9) are mounted rotatably and are equipped with a drive device (16), and the reversing device (2, 2a) has a moveable stop (4, 4a) which, when the test strip is in the wrong position, is driven by means of a position-detection means (6) arranged in the guide (8) and which causes the reversal of the test strips,

    c) the reversing device (2, 2a) is followed by a conveyor belt (27), above which a spray device (28) for liquid is arranged so as to be displaceable parallel to the test strip, and the spray device is equipped with a sensor (45) which stops the conveyor belt (29) when the test strip (13) is located under the spray device (28).

**2.** The apparatus as claimed in claim 1, wherein the transport device (12) comprises a roller (46) with drivers (3a) on its outer surface, the drivers (3a) are designed as noses (19a), and on at least one of the end faces of the roller (46) are arranged bolts (40) which interact with a pawl (39) connected to a return means (42).

**3.** The apparatus as claimed in claim 1, wherein the transport device (12) comprises a conveyor belt (15) which is equipped with drivers (3) and is guided via deflecting rollers (17, 18) and of which the deflecting roller (17) located opposite the orifice (14) has the noses (19).

**4.** The apparatus as claimed in one of claims 1 to 3, wherein the reversing device (2a) comprises an evacuable rotatably mounted hollow roller (23a) which is arranged at a distance above a conveyor belt (27) for the test strips (13) and which with this forms a gap in which the stop (4a) is arranged, and the roller has, on its peripheral surface, a leakage orifice (43), via which the test strip is sucked up and taken up by the roller when the stop (4a) has stopped the test strip.

**5.** The apparatus as claimed in one of claims 1 to 3, wherein the reversing device (2) comprises a roller (23) which has a T-shaped slot parallel to its axis of rotation, one part of the slot forming a through orifice (24) and the other part of the slot forming with the part of the roller (23) located opposite the T shape a stop (4).

**6.** The apparatus as claimed in one of claims 1 to 5, wherein the spray device (28) is equipped with at least one sucking-off device (36) for sucking off excess liquid between the individual test zones (22).

**7.** The apparatus as claimed in one of claims 1 to 5, wherein the spray device (28) is equipped with a stepping mechanism (30) which stops the spray device above each test zone (22) and which is connected to a valve (31) arranged in the liquid-carrying part of the spray device (28).

**Revendications**

**1.** Dispositif de transfert automatique de bandes d'essai (13) pré-sentant au moins un champ d'essai (22) dans un appareil d'analyse, le dispositif étant constitué d'une partie (A) pour délivrer individuellement les bandes d'essai (13), d'une partie (B) pour déterminer la position des champs d'essai (22) et retourner les bandes d'essai (13), et d'une partie (C) pour humidifier de liquide les champs d'essai (22) de la bande d'essai (13),

**caractérisé en ce que**

    a) un récipient (1) de stockage des bandes d'essai (13) est doté d'une ouverture (14) dans laquelle est disposé un convoyeur (12), qui est muni d'entraîneurs (3) transférant les bandes d'essai sur une tôle de guidage (7) et qui présente des mentonnets (19, 19a) qui soulèvent et abaissent un étrier mobile (11) qui fait saillie dans l'ouverture du récipient (1),

b) la tôle de guidage (7) se raccorde à un guidage (8) qui débouche dans un dispositif (2, 2a) de retournement des bandes d'essai (13), un obturateur (9) pour le guidage (8) est disposé entre le guidage (8) et le dispositif de retournement (2, 2a), obturateur qui est relié par un levier (5) à un dispositif (10) de retenue des bandes d'essai (13) qui pénètre dans le guidage et maintient la bande d'essai suivante dès que l'obturateur (9) s'ouvre, le dispositif de retenue (10) et l'obturateur (9) sont montés rotatifs et dotés d'un dispositif d'entraînement (16), et le dispositif de retournement (2, 2a) présente un moyen d'arrêt mobile (4, 4a) qui, en cas de position incorrecte de la bande d'essai reconnue par un dispositif de reconnaissance de position (6) disposé dans le guidage (8), est entraîné et produit le retournement des bandes d'essai,

c) le dispositif de retournement (2, 2a) est suivi d'une bande transporteuse (27), au-dessus de laquelle un dispositif (28) de pulvérisation de liquide est mobile en translation parallèlement à la bande d'essai, et le dispositif de pulvérisation est pourvu d'un capteur (45) qui arrête la bande transporteuse (27) lorsque la bande d'essai (13) se trouve en dessous du dispositif de pulvérisation (28).

2. Dispositif selon la revendication 1, caractérisé en ce que le convoyeur (12) est constitué d'un tambour (46) présentant des entraîneurs (3a) sur son enveloppe, les entraîneurs (3a) sont réalisés sous la forme de mentonnets (19a), et des ergots (40) sont disposés sur au moins une des faces frontales du tambour (46) et coopèrent avec un cliquet (39) qui est relié à un moyen de rappel (42).

3. Dispositif selon la revendication 1, caractérisé en ce que le convoyeur (12) est constitué d'une bande transporteuse (15) qui est pourvue d'entraîneurs (3) et passe par des poulies de renvoi (17, 18), et dont la poulie de renvoi (17) qui se trouve en vis-à-vis de l'ouverture (14) présente les mentonnets (19).

4. Dispositif selon l'une des revendications 1 à 3, caractérisé en ce que le dispositif de retournement (2a) est constitué d'un tambour creux (23a), monté rotatif et pouvant être mis en dépression, qui est disposé à distance au-dessus d'une bande transporteuse (27) pour les bandes d'essai (13) et forme avec cette dernière une fente dans laquelle est disposé le moyen d'arrêt (4a), et le tambour présente sur sa face périphérique une ouverture de fuite (43) par laquelle la bande d'essai est aspirée et conjointement entraînée par le tambour une fois qu'elle a été retenue par le moyen d'arrêt (4a).

5. Dispositif selon l'une des revendications 1 à 3, caractérisé en ce le dispositif de retournement (2) est constitué d'un tambour (23) qui est fendu en T parallèlement à son axe de rotation, une partie de la fente constituant une ouverture de passage (24) et l'autre partie de la fente formant un moyen d'arrêt (4) avec la partie du tambour (23) qui fait face au contour en T.

6. Dispositif selon l'une des revendications 1 à 5, caractérisé en ce que le dispositif de pulvérisation (28) est doté d'au moins un dispositif d'aspiration (36) pour évacuer le liquide excédentaire présent entre les différents champs d'essai (22).

7. Dispositif selon l'une des revendications 1 à 5, caractérisé en ce que le dispositif de pulvérisation (28) est doté d'un mécanisme d'avancement graduel qui arrête le dispositif de pulvérisation au-dessus de chaque champ d'essai (22) et est relié à une soupape (31) disposée dans la partie du dispositif de pulvérisation (28) qui amène le liquide.

FIG.1

FIG. 2

FIG.4

FIG.5

FIG.3